# EUROPÄISCHE PATENTANMELDUNG

(11) **EP 2 239 672 A1**
(43) Veröffentlichungstag der Anmeldung: **13.10.2010**
(21) Anmeldenummer: 06122660.1
(22) Anmeldetag: 20.10.2006
(51) Int. Cl.: G06F 17/30, H04L 12/28, H04L 29/08

(54) **Verfahren zum Auffinden ortsabhängiger Netzwerkdienstinformationen**

(30) Priorität: 21.10.2005 DE 102005050934
(71) Anmelder: Palm, Inc., Sunnyvale, CA 94085-2801 (US)
(72) Erfinder: Koora, Kalyan, 46395, Bocholt (DE)
(74) Vertreter: Samson & Partner

(57) **Zusammenfassung**

Die Erfindung betrifft ein Verfahren zum Auffinden ortsabhängiger Netzwerkdienstinformationen (MIH-Dienstinformationen) über einen Server für einen medienunabhängigen Informationsdienst mit den Schritten:
a) Aufbauen einer Kommunikationsverbindung zwischen einem mobilen Kommunikationsendgerät und einem IP-Netzwerk,
b) Auffinden einer IP-Adresse eines in der Nähe des mobilen Kommunikationsendgerätes befindlichen Servers für den medienunabhängigen Informationsdienst,
c) Aussenden einer Anforderungsmeldung für MIH-Dienstinformationen von dem mobilen Kommunikationsendgerät zu dem Server für den medienunabhängigen Informationsdienst unter Benutzung der in Schritt a) aufgebauten Kommunikationsverbindung und der in Schritt b) aufgefundenen IP-Adresse, wobei die Anforderungsmeldung eine Ortsinformation enthält, die sich auf einen Aufenthaltsort des mobilen Kommunikationsendgerätes bezieht, und
d) Senden von MIH-Dienstinformationen als ortsabhängige Netzwerkdienstinformationen von dem Server für den medienunabhängigen Informationsdienst an das mobile Kommunikationsendgerät.

## Beschreibung

Die Erfindung bezieht sich auf ein Verfahren zum Auffinden ortsabhängiger Netzwerkdienstinformationen über einen Server für einen medienunabhängigen Informationsdienst.

Gegenwärtig werden erhebliche Anstrengungen unternommen, im Rahmen der IEEE 802.21-Standardisierung, die einen medienunabhängigen Handover (MIH) betrifft, ein geeignetes Protokoll für eine höhere Schicht zur Unterstützung der Zwecke von medienunabhängigem Handover zu erarbeiten. Der Anwendungsbereich von IEEE 802.21 ist es, Handover-Mechanismen, wie mobile IP-Kommunikationsverbindungen und SIP ("Session Initiation Protocol"), dadurch zu unterstützen, dass Ereignis -, Befehls- und Informationsdienste - hier als MIH-Dienste bezeichnet - von benachbarten Netzwerken angeboten werden.

Ein besonderes Thema im Rahmen der Diskussion von medienunabhängigem Handover ist es, nach einem Weg zu suchen, auf dem ein mobiles Kommunikationsendgerät über ein höherschichtiges Protokoll ortsabhängige Netwerkdienstinformationen für ggf. einen medienunabhängigen Handover auffinden kann. Solche Informationen finden sich auf einem dafür vorgesehenen Server zur Unterstützung eines medienunabhängigen Informationsdienstes, der Ereignis-, Befehls- und insbesondere Netzwerkinformationsmeldungen an das mobile Kommunikationsendgerät senden kann, das daraufhin ggf. einen Handover zu einer günstigeren Kommunikationsverbindung auslöst.

Dabei ergibt sich jedoch die Problematik, dass diese Meldungen ortsbezogen sind, sich im Fall von Ereignissen beispielsweise auf eine Qualität einer Kommunikationsverbindung, im Falle von Befehlen auf Reaktionen des mobilen Kommunikationsgerätes auf festgestellte Ereignisse und im Fall von Informationen auf vorhandene Netzwerke und deren Eigenschaften beziehen.

Ausgehend hiervon liegt der Erfindung die Aufgabe zugrunde, ein Verfahren zum Auffinden ortsabhängiger Netzwerkinformationen von einem medienunabhängigen Informationsdienst anzugeben, welcher an das mobile Kommunikationsendgerät ortsbezogene Ereignis-, Befehls- und/oder Informationsmeldungen sendet, die beispielsweise einen Handover von einer bestehenden Kommunikationsverbindung zu einer neuen unterstützen.

Diese Aufgabe wird gelöst durch ein Verfahren zum Auffinden ortsabhängiger Netzwerkdienstinformationen (MIH-Dienstinformationen) über einen Server für einen medienunabhängigen Informationsdienst mit den Schritten:
a) Aufbauen einer Kommunikationsverbindung zwischen einem mobilen Kommunikationsendgerät und einem IP-Netzwerk,
b) Auffinden einer IP-Adresse eines in der Nähe des mobilen Kommunikationsendgerätes befindlichen Servers für den medienunabhängigen Informationsdienst,
c) Aussenden einer Anforderungsmeldung für MIH-Dienstinformationen von dem mobilen Kommunikationsendgerät zu dem Server für den medienunabhängigen Informationsdienst unter Benutzung der in Schritt a) aufgebauten Kommunikationsverbindung und der in Schritt b) aufgefundenen IP-Adresse, wobei die Anforderungsmeldung eine Ortsinformation enthält, die sich auf einen Aufenthaltsort des mobilen Kommunikationsendgerätes bezieht, und
d) Senden von MIH-Dienstinformationen als ortsabhängige Netzwerkdienstinformationen von dem Server für den medienunabhängigen Informationsdienst an das mobile Kommunikationsendgerät.

Dieses Verfahren beruht auf dem Vorhandensein der in Schritt a) aufgebauten Kommunikationsverbindung zu einem IP-Netzwerk, innerhalb dem der Server für den medienunabhängigen Informationsdienst mit Hilfe seiner IP-Adresse kontaktierbar ist. Da die Anforderungsmeldung für MIH-Dienstinformationen ortsbezogene Daten enthält, die Rückschlüsse auf einen Aufenthaltsorts des mobilen Kommunikationsendgerätes zulassen, wird der Server für den medienunabhängigen Informationsdienst, der solche Meldungen versendet, in die Lage versetzt, ortsbezogene Informationen z. B. über eine Netzwerktopologie am Ort an das mobile Kommunikationsendgerät auszusenden. Solche ortsbezogenen Informationen können beispielsweise an dem Ort des mobilen Kommunikationsendgerätes befindliche drahtlose lokale Netzwerke oder andere Mobilfunkmedien wie UMTS oder Verbindungen nach dem Wimax-Protokoll IEEE 802.16 betreffen. Dabei können die Meldungen des Servers für den medienunabhängigen Informationsdienst so beschaffen sein, dass sie an dem Ort verfügbare Dienste von Roaming-Partnern des Standard-Kommunikationsdienstes für das mobile Kommunikationsendgerät enthalten.

Bevorzugt ist in Schritt c) die Ortsinformation aus einer Gruppe ausgewählt, die eine GPS-Information oder eine für die in Schritt a) aufgebaute Kommunikationsverbindung eindeutige Basisstationsinformation oder Zugriffspunkt-Identifikationsnummer umfasst. Diese sämtlichen Daten sind geeignet, eine für den Server für den medienunabhängigen Informationsdienst ausreichend genaue Ortsinformation zu liefern, so dass er geeignete Meldungen an das mobile Kommunikationsendgerät aussenden kann.

In Schritt a) kann für die Verbindung in das IP-Netzwerk eine GPRS-Verbindung verwendet werden. Diese Verbindung wird aufgrund des TCP-IP-Protokolls über ein Point-to-Point-Protokoll (PPP) etabliert und dient somit zum Übertragen der Anforderungsmeldung von dem mobilen Kommunikationsendgerät zu dem Server für den medienunabhängigen Informationsdienst.

Zum Bekanntmachen der IP-Adresse des in der Nähe des mobilen Kommunikationsendgerätes befindlichen Servers für den medienunabhängigen Informationsdienst stehen mehrere Alternativen zur Verfügung. Dabei bedeutet "in der Nähe befindlich" eine solche Auswahl des Servers, dass er über Informationen verfügt, die sich auf den Ort des mobilen Kommunikationsendgerätes beziehen und die bereits oben erläuterten Ereignisse, Befehle oder Informationen betreffen.

IP-Adressen von Servern für den medienunabhängigen Informationsdienst einschließlich der IP-Adresse des in der Nähe befindlichen Servers können vorab in dem mobilen Kommunikationsendgerät gespeichert sein. Es ist ebenfalls möglich, dass das mobile Kommunikationsendgerät wiederum unter Nutzung der in Schritt a) aufgebauten Kommunikationsverbindung die IP-Adresse des Servers für den medienunabhängigen Informationsdienst aus dem IP-Netzwerk gewinnt oder beim Aufbau einer solchen verbindung über Dynamic Host Configuration Protokoll (DHCP) automatisch bezieht.

Aufgrund der erhaltenen Informationen, insbesondere über am Ort des mobilen Kommunikationsendgerätes vorhandene Netzwerktopologien, kann das mobile Kommunikationsendgerät in einem Schritt e) eine neue Kommunikationsverbindung aufbauen und für weitere Kommunikationszwecke benutzen. Dabei kann insbesondere ein Wechsel von einer Call-by-Call-Verbindung zu einem Roaming-Partner-Dienst vollzogen werden.

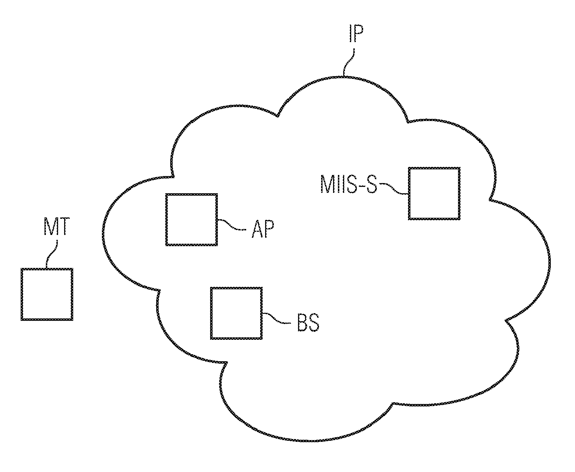

Ausführungsbeispiele der Erfindung werden nachfolgend unter Bezugnahme auf die Zeichnung noch näher erläutert. Die einzige Figur zeigt eine Netzwerkanordnung, die ein mobiles Kommunikationsendgerät und einen Server für den medienunabhängigen Informationsdienst umfasst.

Die in der Figur dargestellte Netzwerkanordnung umfasst ein mobiles Kommunikationsendgerät MT. Dieses mobile Kommunikationsendgerät MT, ausgestattet mit GPS, WLAN- und GPRS-Unterstützung befindet sich beispielsweise in einer speziellen Umgebung, wie einem Flughafen, einem Bahnhof, o. ä., bei der eine Mehrzahl von Kommunikationsverbindungen über verschiedene Medien in ein IP-Netzwerk möglich sind. In der speziellen Umgebung sind beispielsweise eine Basisstation eines zellularen Mobilfunksystems und gleichzeitig mehrere Zugangspunkte für drahtlose lokale Netzwerke vorhanden, von denen in der Figur nur ein Zugangspunkt AP gezeigt ist.

Im vorliegenden Ausführungsbeispiel hat das mobile Kommunikationsendgerät MT bereits über eine Basisstation BS eine TCP-IP-Kommunikationsverbindung in das IP-Netzwerk über PPP etabliert. Die GPRS-Kommunikationsverbindung, die aktiv ist, ist beispielsweise von einem Roaming-Partner des Netzwerkproviders bereitgestellt, mit dem der Benutzer des mobilen Kommunikationsendgerätes MT einen Nutzungsvertrag geschlossen hat. Der Benutzer löst ein Herunterladen einer großen Datei über die GPRS-Verbindung aus. Entweder automatisch oder bei der Feststellung, dass beispielsweise ein zusätzlicher WLAN-Zugangspunkt an dem Standort des mobilen Kommunikationsendgerätes MT verfügbar ist, sendet das mobile Kommunikationsendgerät MT eine Anfragemeldung an einen Server für einen medienunabhängigen Informationsdienst (MIIS) aus, und zwar über die bestehende GPRS-Kommunikationsverbindung.

Zum Kontaktieren des Servers für den medienunabhängigen Informationsdienst benötigt das mobile Kommunikationsendgerät MT zunächst dessen IP-Adresse. Dazu kann in dem mobilen Kommunikationsendgerät MT eine Mehrzahl IP-Adressen von einem Netz solcher Server vorab gespeichert sein. Alternativ dazu kann das mobile Kommunikationsendgerät MT die notwendige IP-Adresse über die GPRS-Mobilfunkverbindung aus dem IP-Netzwerk beziehen oder bei der Beziehung der IP-Adresse über DHCP automatisch bekommen. Dort kann beispielsweise eine gesonderte Netzwerkinstanz vorhanden sein, die eine Zuordnung zwischen Aufenthaltsorten und zuständigen Servern für den medienunabhängigen Informationsdienst enthält.

Zur Bereitstellung von Ortsinformationen verfügt das mobile Kommunikationsendgerät MT über das GPS-Modul, das Ortskoordinaten des mobilen Kommunikationsendgerätes MT liefert. Alternativ dazu kann der Aufenthaltsort des mobilen Kommunikationsendgerätes MT auch durch eine ortsbezogene Information über die Basisstation BS oder eine Zugangspunkt-Identifikationsnummer im Fall einer WLAN-Kommunikationsverbindung bereitgestellt werden.

Sobald das mobile Kommunikationsendgerät MT die benötigte IP-Adresse des Servers MIIS-S in Erfahrung gebracht hat, kann die Anforderungsmeldung für MIH-Dienstinformationen, d. h.

Informationen für einen medienunabhängigen Handover, ausgesandt und verarbeitet werden. Bei Empfang der Anforderungsmeldung durch den Server MIIS-S prüft dieser in seiner Datenbasis, ob am Aufenthaltsort des mobilen Kommunikationsendgerätes MT ein geeigneter WLAN-Zugangspunkt, im vorliegenden Fall der Zugangspunkt AP, vorhanden ist. Eine WLAN-Verbindung wäre zum Herunterladen der großen Datei günstiger als die GPRS-Verbindung, und zwar aufgrund des höheren Datendurchsatzes. Die Datenbasis enthält eine Zuordnung zwischen Roaming-Partnern des Providers, der für das mobile Kommunikationsendgerät genutzt wird, und deren Präsenz am Aufenthaltsort der mobilen Kommunikationsendgerätes. Sofern in der Datenbasis ein WLAN-Zugangspunkt am Aufenthaltsort des mobilen Kommunikationsendgerätes MT aufgefunden wird, für den ebenfalls eine Roaming-Vereinbarung vorhanden ist, sendet der Server MIIS-S eine Antwortmeldung an das mobile Kommunikationsendgerät MT. Alternativ kann auch das mobile Kommunikationsendgerät MT selbst aufgrund der Informationen von dem Server MIIS-S entscheiden, ob ein Handover durchzuführen ist. Dann kann das mobile Kommunikationsendgerät MT unter Durchführung eines Handovers eine neue Kommunikationsverbindung über den Zugangspunkt AP etablieren und das Herunterladen der großen Datei über die neue Kommunikationsverbindung über den Zugangspunkt AP fortsetzen.

In dieser Weise wird ein medienunabhängiger Handover von der GPRS-Kommunikationsverbindung zu der WLAN-Kommunikationsverbindung herbeigeführt. Wesentlicher Aspekt dafür ist es, dass die Anforderungsmeldung des mobilen Kommunikationsendgerätes MT an den Server MIIS-S Ortsinformationen des mobilen Kommunikationsendgerätes MT enthält, so dass der Server MIIS-S speziell für diesen Aufenthaltsort gültige Informationen bereitstellen kann.

## Patentansprüche

1. Verfahren zum Auffinden ortsabhängiger Netzwerkdienstinformationen (MIH-Dienstinformationen) über einen Server für einen medienunabhängigen Informationsdienst mit den Schritten:
a) Aufbauen einer Kommunikationsverbindung zwischen einem mobilen Kommunikationsendgerät und einem IP-Netzwerk,
b) Auffinden einer IP-Adresse eines in der Nähe des mobilen Kommunikationsendgerätes befindlichen Servers für den medienunabhängigen Informationsdienst,
c) Aussenden einer Anforderungsmeldung für MIH-Dienstinformationen von dem mobilen Kommunikationsendgerät zu dem Server für den medienunabhängigen Informationsdienst unter Benutzung der in Schritt a) aufgebauten Kommunikationsverbindung und der in Schritt b) aufgefundenen IP-Adresse, wobei die Anforderungsmeldung eine Ortsinformation enthält, die sich auf einen Aufenthaltsort des mobilen Kommunikationsendgerätes bezieht, und
d) Senden von MIH-Dienstinformationen als ortsabhängige Netzwerkdienstinformationen von dem Server für den medienunabhängigen Informationsdienst an das mobile Kommunikationsendgerät.

2. Verfahren nach Anspruch 1,
bei dem
in Schritt c) die Ortsinformation aus einer Gruppe ausgewählt wird, die eine GPS-Information oder eine für die in Schritt a) aufgebaute Kommunikationsverbindung eindeutige Basisstationsinformation oder Zugriffspunkt-Identifikationsnummer umfasst.

3. Verfahren nach Anspruch 1 oder 2,
bei dem
in Schritt a) für die Verbindung in das IP-Netzwerk eine GPRS-Verbindung verwendet wird.

4. Verfahren nach einem der Ansprüche 1 bis 3,
bei dem
IP-Adressen von Servern für den medienunabhängigen Informationsdienst einschließlich der IP-Adresse des in der Nähe befindlichen Servers vorab in dem mobilen Kommunikationsendgerät gespeichert werden.

5. Verfahren nach einem der Ansprüche 1 bis 3,
bei dem
das mobile Kommunikationsendgerät die IP-Adresse des in der Nähe befindlichen Servers für den medienunabhängigen Informationsdienst aus dem IP-Netzwerk gewinnt.

6. Verfahren nach einem der Ansprüche 1 bis 5,
bei dem
in einem Schritt e) das mobile Kommunikationsendgerät aufgrund der in Schritt d) empfangenen Meldungen eine neue Kommunikationsverbindung aufbaut.

7. Verfahren nach einem der Ansprüche 1 bis 6,
bei dem
Schritt c) dann durchgeführt wird, wenn das mobile Kommunikationsendgerät einen Zugangspunkt für eine weitere mobile Kommunikationsverbindung auffindet.

8. Verfahren nach einem der Ansprüche 1 bis 7,
bei dem
der Server für den medienunabhängigen Informationsdienst in Schritt c) auf eine Datenbasis zugreift, die eine Zuordnung zwischen Roaming-Partnern des Providers, der für das mobile Kommunikationsendgerät genutzt wird, und deren Präsenz am Aufenthaltsort der mobilen Kommunikationsendgerätes enthält.
